# EUROPEAN PATENT APPLICATION

(11) **EP 4 597 818 A1**
(43) Date of publication of application: **06.08.2025**
(21) Application number: 24828723.7
(22) Date of filing: 24.10.2024
(51) Int. Cl.: H02M 7/06, H02M 7/48

(54) **POWER GENERATION DEVICE**

(30) Priority: 07.11.2023 JP 2023189931
(71) Applicant: Daikin Industries, Ltd., Osaka-shi, Osaka 530-0001 (JP)
(72) Inventor: FUJIWARA, Masahide, Osaka-shi, Osaka 530-0001 (JP); KOTERA, Keito, Osaka-shi, Osaka 530-0001 (JP); NAKATSUJI, Yosuke, Osaka-shi, Osaka 530-0001 (JP); HIRAOKA, Nobuyasu, Osaka-shi, Osaka 530-0001 (JP); ITOU, Taku, Osaka-shi, Osaka 530-0001 (JP); DOI, Hirotaka, Osaka-shi, Osaka 530-0001 (JP); TANIMUKAI, Kazuma, Osaka-shi, Osaka 530-0001 (JP)
(74) Representative: Hoffmann Eitle
(86) International application number: PCT/JP2024/037861
(87) International publication number: WO 2025/100245

(57) **Abstract**

An object of the present disclosure is, when two single-phase diode bridges are used in place of a three-phase converter installed in a three-phase, four-wire, 400 V air conditioner, to suppress heat generation in the single-phase diode bridges themselves and patterns directly below the diode bridges. A power generation device (100) includes a first converter (20A) and a second converter (20B), which are mounted on a printed wiring board (10). The first converter (20A) includes a first diode bridge (21Aa) connected between a first wire (11) connected to an R phase and a second wire (12) connected to an S phase, and a second diode bridge (21Ab) connected between the second wire (12) and a third wire (13) connected to a T phase, converting AC power into DC power. The second converter (20B) includes a third diode bridge (21B) connected between a fourth wire (14) connected to an N phase and a fifth wire (15) branching off from the first wire (11), converting AC power into DC power.

## Description

### TECHNICAL FIELD

The present disclosure relates to a power generation device installed in a three-phase, four-wire, 400 V air conditioner.

### BACKGROUND ART

In a three-phase, four-wire, 400 V air conditioner, a 400 V converter circuit installed in an outdoor unit generally includes one three-phase diode bridge, as disclosed in Patent Literature 1 (Japanese Patent Publication Laid-Open No. 2012-165509), for example.

Meanwhile, to break away from the high cost of the three-phase diode bridge, the use of two single-phase diode bridges is being considered.

### SUMMARY OF THE INVENTION

### <Technical Problem>

However, in the three-phase, four-wire, 400 V air conditioner, to apply the use of two single-phase diode bridges instead of one three-phase diode bridge, there is a challenge to suppress heat generation in the single-phase diode bridges themselves and patterns directly below the diode bridges.

### <Solution to Problem>

A power generation device according to a first aspect is a power generation device mounted on a printed wiring board, and includes an input terminal, a first wire, a second wire, a third wire, a fourth wire, a first converter, a fifth wire, and a second converter. The input terminal is configured such that an R phase, an S phase, a T phase, and an N phase are input from a power source that supplies three-phase AC in a three-phase, four-wire system. The first wire, the second wire, the third wire, and the fourth wire are connected to the R phase, S phase, T phase and N phase, respectively, via the input terminal. The first converter includes: a first diode bridge connected between two power source lines selected from three power source lines of the first wire, the second wire, and the third wire as a first combination; and a second diode bridge connected between two power source lines selected from the three power source lines as a second combination different from the first combination, converting AC power into DC power. The fifth wire branches off from any one of the first wire, the second wire, and the third wire. The second converter includes a third diode bridge connected between the fourth wire and the fifth wire, converting AC power into DC power.

In this power generation device, one input of the second converter is connected to any one of the first wire, the second wire, and the third wire between the input terminal and the first converter, and the other input of the second converter is connected to the fourth wire (N phase), allowing an increase in a current value flowing through the first diode bridge and the second diode bridge of the first converter to be suppressed.

A power generation device according to a second aspect is a power generation device mounted on a printed wiring board, and includes an input terminal, a first wire, a second wire, a third wire, a fourth wire, a first converter, a fifth wire, and a second converter. The input terminal is configured such that an R phase, an S phase, a T phase, and an N phase are input from a power source that supplies three-phase AC in a three-phase, four-wire system. The first wire, the second wire, the third wire, and the fourth wire are connected to the R phase, S phase, T phase and N phase, respectively, via the input terminal. The first converter includes: a first diode bridge connected to one power source line selected from three power source lines of the first wire, the second wire, and the third wire; and a second diode bridge connected between remaining two power source lines, converting AC power to DC power. The fifth wire branches off from any one of the first wire, the second wire, and the third wire. The second converter includes a third diode bridge connected between the fourth wire and the fifth wire, converting AC power into DC power.

In this power generation device, one input of the second converter is connected to any one of the first wire, the second wire, and the third wire between the input terminal and the first converter, and the other input of the second converter is connected to the fourth wire (N phase), allowing an increase in a current value flowing through the first diode bridge and the second diode bridge of the first converter to be suppressed.

The power generation device according to a third aspect is the power generation device according to the first aspect or the second aspect, in which a branching point of the fifth wire is located between a center position of a length of the wire from which the fifth wire branches off, and the input terminal.

In this power generation device, in a section from the input terminal to the first converter, the branching point of the fifth wire is at least half the distance of the section away from the first converter. In this way, moving the branching point of the fifth wire away from the first converter makes the heat generated at the branching point of the fifth wire less likely to be transmitted to the first converter, and suppresses heat concentration around terminals of the first converter.

The power generation device according to a fourth aspect is the power generation device according to any one of the first aspect to the third aspect, and further includes a sixth wire, a seventh wire, and a third converter. The sixth wire and the seventh wire branch off from any two wires of the first wire, the second wire, and the third wire. The third converter includes a fourth diode bridge connected between the sixth wire and the seventh wire, converting AC power into DC power.

In this power generation device, each of two inputs of the third converter is connected to any two of the first wire, the second wire, and the third wire between the input terminal and the first converter, thereby suppressing an increase in a current value flowing through the first diode bridge and the second diode bridge of the first converter.

The power generation device according to a fifth aspect is the power generation device according to any one of the first aspect to the fourth aspect, in which each of the first diode bridge and the second diode bridge is a diode module in which four bridge-connected diode chips are incorporated in one package. The two diode modules are mounted on a first surface of the printed wiring board.

The power generation device according to a sixth aspect is the power generation device according to the fifth aspect, in which each of the diode modules includes a terminal group and a terminal arrangement surface on which the terminal group is arranged. In the terminal group, two AC input terminals and two DC output terminals are arranged in a row in a first direction. The two diode modules are disposed such that each of the terminal groups is separated from each other by a creepage distance of 3.2 mm or more, and each of the terminal arrangement surfaces does not face each other.

In this power generation device, the terminal groups of the two diode modules do not face each other, suppressing heat concentration on the terminals and conductive patterns.

The power generation device according to a seventh aspect is the power generation device according to the fifth aspect, in which the diode modules include a heat dissipation plate.

The power generation device according to an eighth aspect is the power generation device according to the fifth aspect, in which each of the diode modules includes two AC input terminals and two DC output terminals. At least one of a varistor and a surge absorber is connected between the two AC input terminals.

In this power generation device, even when a voltage exceeding a predetermined value is applied between the AC input terminals, the voltage between the AC input terminals can be limited to the predetermined value.

The power generation device according to a ninth aspect is the power generation device according to the fifth aspect, in which each of the diode modules includes two AC input terminals and two DC output terminals. At least one of a varistor and a film capacitor is connected between the two DC output terminals.

This power generation device absorbs extraneous pulses or power source noise, and further prevents the transmission of noise to the AC power source.

The power generation device according to a tenth aspect is the power generation device according to any one of the first aspect to the ninth aspect, and further includes a first inverter circuit connected between output terminals of the first converter. The first inverter circuit is a power module in which an upper arm-side switching element and a lower arm-side switching element are incorporated in one package, and is mounted on the first surface of the printed wiring board.

**In** this power generation device, modularization facilitates the design of peripheral circuits on the first surface of the printed wiring board, which is the mounting surface.

The power generation device according to an eleventh aspect is the power generation device according to any one of the first aspect to the tenth aspect, and further includes a second inverter circuit connected between output terminals of the second converter. The second inverter circuit is a power module in which an upper arm-side switching element and a lower arm-side switching element are incorporated in one package, and is mounted on the first surface of the printed wiring board.

In this power generation device, modularization facilitates the design of peripheral circuits on the first surface of the printed wiring board, which is the mounting surface.

The power generation device according to a twelfth aspect is the power generation device according to any one of the first aspect to the eleventh aspect, in which the printed wiring board is a multilayer printed wiring board having a plurality of conductive pattern layers laminated with an insulator layer interposed therebetween.

In this power generation device, the conductive patterns can be wired not only on the surface but also in inner layers of the printed wiring board, making it possible to mount components at a high density.

The power generation device according to a thirteenth aspect is the power generation device according to the fifth aspect, and further includes a first inverter circuit, a second inverter circuit, and one heat sink. The first inverter circuit is connected between output terminals of the first converter. The second inverter circuit is connected between output terminals of the second converter. Each of the first inverter circuit and the second inverter circuit is a power module in which an upper arm-side switching element and a lower arm-side switching element are incorporated in one package, and is mounted on the first surface of the printed wiring board. The heat sink cools the two diode modules and the two power modules.

In this power generation device, one heat sink cools two diode modules and two power modules, making it possible to reduce the number of parts and the installation space.

### BRIEF DESCRIPTION OF THE DRAWINGS

FIG. 1 is a circuit diagram showing a configuration of a power generation device according to a first embodiment of the present disclosure.
FIG. 2 is a configuration diagram of an inverter circuit and a drive circuit that drives the inverter circuit.
FIG. 3A is a plan view of a diode module used as a first diode bridge and a second diode bridge.
FIG. 3B is a side view of the diode module used as the first diode bridge and the second diode bridge.
FIG. 4 is a plan view showing mounting positions of the first diode bridge and the second diode bridge on a printed wiring board.
FIG. 5 is a plan view showing mounting positions of the first diode bridge and the second diode bridge on the printed wiring board in the first modification.
FIG. 6 is a plan view showing mounting positions of the first diode bridge and the second diode bridge on the printed wiring board in the second modification.
FIG. 7 is a plan view showing mounting positions of the first diode bridge and the second diode bridge on the printed wiring board in the third modification.
FIG. 8 is a circuit diagram showing a configuration of a power generation device according to a second embodiment of the present disclosure.
FIG. 9 is a plan view of a heat sink, which cools a first diode bridge, a second diode bridge, a first inverter circuit, and a second inverter circuit.
FIG. 10 is a circuit diagram showing a configuration of the power generation device including the first diode bridge connected to one power source line selected from three power source lines: a first wire, a second wire, and a third wire, and the second diode bridge connected between remaining two power source lines.
FIG. 11 is another circuit diagram showing the configuration of the power generation device including the first diode bridge connected to one power source line selected from three power source lines: the first wire, the second wire, and the third wire, and the second diode bridge connected between remaining two power source lines.
FIG. 12 is a circuit diagram when the wiring method of the first diode bridge in FIG. 10 is applied to FIG. 8.
FIG. 13 is a circuit diagram when the wiring method of the first diode bridge in FIG. 11 is applied to FIG. 8.

### DESCRIPTION OF EMBODIMENTS

### <First embodiment>

### (1) Outline of power generation device 100

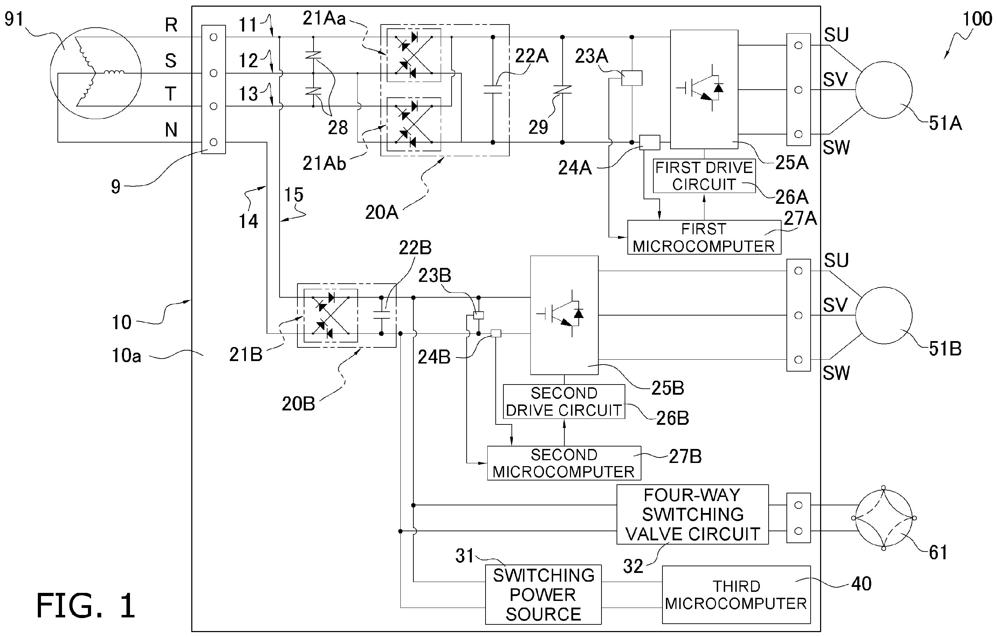

FIG. 1 is a circuit diagram showing a configuration of the power generation device 100 according to the first embodiment of the present disclosure. In FIG. 1, the power generation device 100 includes a first converter 20A and a second converter 20B, which are mounted on a first surface 10a of a printed wiring board 10.

The first converter 20A includes a first diode bridge 21Aa connected between two power source lines selected from three power source lines of a first wire 11, a second wire 12, and a third wire 13 as a first combination, and a second diode bridge 21Ab connected between two power source lines selected from the three power source lines as a second combination different from the first combination.

In the present embodiment, the first converter 20Aincludes the first diode bridge 21Aa connected between the first wire 11 connected to an R phase and the second wire 12 connected to an S phase, and the second diode bridge 21Ab connected between the second wire 12 and the third wire 13 connected to a T phase, converting AC power into DC power.

The second converter 20B includes a third diode bridge 21B connected between a fourth wire 14 connected to an N phase and a fifth wire 15 branching off from the first wire 11, converting AC power into DC power.

The power generation device 100 of the present disclosure is installed, for example, in an outdoor unit of a three-phase, four-wire, 400 V air conditioner.

### (2) Detailed configuration

### (2-1) Printed wiring board 10

The printed wiring board 10 is a multilayer printed wiring board having a plurality of conductive pattern layers laminated with insulator layers interposed therebetween.

An input terminal 9, the first converter 20A, the second converter 20B, a first inverter circuit 25A, a second inverter circuit 25B, a switching power source 31, a four-way switching valve circuit 32, which are components of the power generation device 100, and a plurality of microcomputers that control these components are mounted on the printed wiring board 10.

The input terminal 9 is configured such that the R phase, the S phase, the T phase, and the N phase are input from an AC power source 91 that supplies three-phase AC in a three-phase, four-wire system. The first wire 11, the second wire 12, the third wire 13, and the fourth wire 14, which are conductive patterns, are connected to the R phase, the S phase, the T phase, and the N phase of the AC power source 91, respectively, via the input terminal 9.

### (2-2) First converter 20A

The first converter 20A includes the first diode bridge 21Aa, the second diode bridge 21Ab, and a first smoothing capacitor 22A.

The first diode bridge 21Aa is a single-phase diode bridge. The first diode bridge 21Aa fully rectifies the AC power input from the first wire 11 connected to the R phase and the second wire 12 connected to the S phase.

The second diode bridge 21Ab is a single-phase diode bridge. The second diode bridge 21Ab fully rectifies the AC power input from the second wire 12 and the third wire 13 connected to the T phase.

Each of the first diode bridge 21Aa and the second diode bridge 21Ab is a diode module in which four bridge-connected diode chips are incorporated in one package. The first diode bridge 21Aa and the second diode bridge 21Ab are mounted on the first surface 10a of the printed wiring board 10.

The first smoothing capacitor 22A smooths output voltages from the first diode bridge 21Aa and the second diode bridge 21Ab.

### (2-3) Second converter 20B

The second converter 20B includes the third diode bridge 21B and a second smoothing capacitor 22B. The third diode bridge 21B is a single-phase diode bridge.

The third diode bridge 21B fully rectifies the AC power input from the fourth wire 14 connected to the N phase and the fifth wire 15 branching off from the first wire 11.

The wire from which the fifth wire 15 branches off may be any of the first wire 11, the second wire 12, or the third wire 13.

The third diode bridge 21B is a diode module in which four bridge-connected diode chips are incorporated in one package.

The second smoothing capacitor 22B smooths the output voltage from the third diode bridge 21B.

### (2-4) Voltage detection unit 23A

The voltage detection unit 23A is connected to an output side of the first smoothing capacitor 22A, and detects the voltage across the first smoothing capacitor 22A. The voltage detection unit 23A is configured such that two resistances connected in series to each other are connected in parallel to the smoothing capacitor 22, and the voltage across the first smoothing capacitor 22A is divided. A voltage value at a connection point between these two resistances is input to a first microcomputer 27A.

### (2-5) Voltage detection unit 23B

The voltage detection unit 23B is connected to an output side of the second smoothing capacitor 22B, and detects the voltage across the second smoothing capacitor 22B. The voltage detection unit 23B is configured such that two resistances connected in series to each other are connected in parallel to the second smoothing capacitor 22B, and the voltage across the second smoothing capacitor 22B is divided. A voltage value at a connection point between these two resistances is input to a second microcomputer 27B.

### (2-6) Current detection unit 24A

The current detection unit 24Ais connected between the first smoothing capacitor 22A and the first inverter circuit 25A and to a negative output terminal side of the first smoothing capacitor 22A. The current detection unit 24A detects a motor current flowing through a first motor 51A after an activation of the first motor 51A.

The current detection unit 24A may include an amplifier circuit using a shunt resistance and an operational amplifier that amplifies a voltage across the resistance. The motor current detected by the current detection unit 24A is input to the first microcomputer 27A.

### (2-7) Current detection unit 24B

The current detection unit 24B is connected between the second smoothing capacitor 22B and the second inverter circuit 25B and to a negative output terminal side of the second smoothing capacitor 22B. The current detection unit 24B detects a motor current flowing through a second motor 51B after an activation of the second motor 51B.

The current detection unit 24B may include an amplifier circuit using a shunt resistance and an operational amplifier that amplifies a voltage across the resistance. The motor current detected by the current detection unit 24B is input to the second microcomputer 27B.

### (2-8) First inverter circuit 25A, second inverter circuit 25B

The first inverter circuit 25A is connected to the output side of the first smoothing capacitor 22A. The second inverter circuit 25B is connected to the output side of the second smoothing capacitor 22B. The first inverter circuit 25A and the second inverter circuit 25B, which have the same configuration, will be described as an inverter circuit 25.

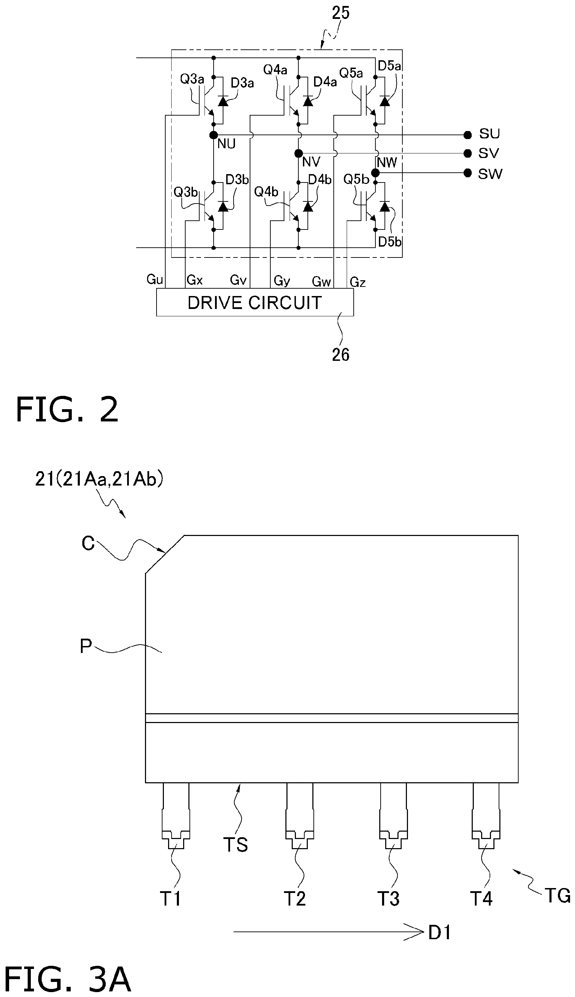

FIG. 2 is a configuration diagram of the inverter circuit 25 and a drive circuit 26 that drives the inverter circuit 25. In FIG. 2, the inverter circuit 25 includes a plurality of insulated gate bipolar transistors (hereinafter simply referred to as transistors) Q3a, Q3b, Q4a, Q4b, Q5a, and Q5b, and a plurality of freewheeling diodes D3a, D3b, D4a, D4b, D5a, and D5b, as switching elements.

The transistors Q3a and Q3b, Q4a and Q4b, and Q5a and Q5b are connected in series with each other, and the diodes D3a to D5b are respectively connected in parallel with the transistors Q3a to Q5b with a collector terminal of each transistor connected to a cathode terminal of the corresponding diode and an emitter terminal of each transistor connected to an anode terminal of the corresponding diode.

The inverter circuit 25 generates drive voltages SU, SV, and SW for driving a motor, by applying a DC voltage from the converter and turning on and off the transistors Q3a to Q5b at timing instructed by the drive circuit 26. The drive voltages SU, SV, and SW are output to the motor from connection points NU, NV, and NW of the transistors Q3a and Q3b, Q4a and Q4b, and Q5a and Q5b, respectively.

Each of the first inverter circuit 25A and the second inverter circuit 25B is a power module in which upper arm-side switching elements (Q3a, Q4a, Q5a, D3a, D4a, and D5a) and lower arm-side switching elements (Q3b, Q4b, Q5b, D3b, D4b, and D5b) are incorporated in one package.

The first inverter circuit 25A and the second inverter circuit 25B are mounted on the first surface 10a of the printed wiring board 10.

### (2-9) First drive circuit 26A, second drive circuit 26B

The first drive circuit 26A changes on and off states of the transistors Q3a to Q5b of the first inverter circuit 25A on the basis of a drive command from the first microcomputer 27A. The second drive circuit 26B changes on and off states of the transistors Q3a to Q5b of the second inverter circuit 25B on the basis of a drive command from the second microcomputer 27B.

The first drive circuit 26A and the second drive circuit 26B, which have the same configuration, will be described as a drive circuit 26.

As shown in FIG. 2, the drive circuit 26 generates gate control voltages Gu, Gx, Gv, Gy, Gw, and Gz to be applied to the gates of respective transistors Q3a to Q5b such that the inverter circuit 25 outputs, to the motor, the drive voltages SU, SV, and SW in a duty ratio determined by the microcomputers. The generated gate control voltages Gu, Gx, Gv, Gy, Gw, and Gz are respectively applied to gate terminals of the transistors Q3a to Q5b.

### (2-10) First microcomputer 27A, second microcomputer 27B, third microcomputer 40

The first microcomputer 27A is connected to the voltage detection unit 23A, the current detection unit 24A, and the first drive circuit 26A. The first microcomputer 27A controls the first drive circuit 26A to drive the first motor 51A. As one example, in the present embodiment, the first motor 51A is used as a drive motor for a compressor.

The second microcomputer 27B is connected to the voltage detection unit 23B, the current detection unit 24B, and the second drive circuit 26B. The second microcomputer 27B controls the second drive circuit 26B to drive the second motor 51B. As one example, in the present embodiment, the second motor 51B is used as a drive motor for a fan.

The third microcomputer 40 is a refrigerant control microcomputer. The third microcomputer 40, for example, controls the opening degree of an electrically powered expansion valve of the air conditioner to adjust the evaporation temperature, the degree of superheating, and the degree of subcooling of a refrigerant.

### (2-11) First varistor 28, second varistor 29

A surge absorber or a varistor that serves as an overvoltage suppression element is connected between AC input terminals of the first diode bridge 21Aa and the second diode bridge 21Ab. The first varistor 28 is connected in the present embodiment. When a voltage exceeding a predetermined value is applied between the AC input terminals, the first varistor 28 limits the voltage between the AC input terminals to the predetermined value.

At least one of the overvoltage suppression element and a noise eliminating element is connected between DC output terminals of the first diode bridge 21Aa and the second diode bridge 21Ab. As the overvoltage suppression element, a surge absorbers or a varistor is adopted. As the noise eliminating element, a film capacitor is adopted. In the present embodiment, the second varistor 29 that serves as the overvoltage suppression element is connected. The second varistor 29 is connected between the first smoothing capacitor 22A and the first inverter circuit 25A to absorb a surge that occurs when the switching elements operate.

### (2-12) Switching power source 31

The switching power source 31 is connected to the output side of the second converter 20B, and supplies power to the first microcomputer 27A, the second microcomputer 27B, and the third microcomputer 40.

### (2-13) Four-way switching valve circuit 32

The four-way switching valve circuit 32 is connected to the output side of the second converter 20B. The four-way switching valve circuit 32 uses the power output from the second converter 20B to switch a flow path of a four-way switching valve 61. The four-way switching valve 61 is a valve that switches the circulation direction of the refrigerant in a refrigerant circuit.

### (3) Relationship between first converter 20A and second converter 20B

The first converter 20A of the present embodiment has a circuit configuration that fully rectifies AC power of the three-phase, four-wire AC power source by using two diode bridges, the first diode bridge 21Aa and the second diode bridge 21Ab, providing cost advantages over a circuit configuration that fully rectifies AC power with a single three-phase diode bridge.

Meanwhile, the heat resistance of the standalone first diode bridge 21Aa and second diode bridge 21Ab is lower than the heat resistance of the diode module of the single three-phase diode bridge. Therefore, measures to reduce heat generation during operations are required.

Therefore, to keep the current flowing through the first diode bridge 21Aa and the second diode bridge 21Ab low, the present embodiment has a configuration in which the power source of the switching power source 31 and the four-way switching valve circuit 32 is not drawn from downstream of the first converter 20A.

Specifically, as shown in FIG. 1, the AC power input to the second converter 20B is AC power input from the fourth wire 14 connected to the N phase and the fifth wire 15 branching off from the first wire 11 connected to the R phase.

Then, the power source of the switching power source 31 and the four-way switching valve circuit 32 is drawn from downstream of the second converter 20B. This makes it possible to suppress an increase in the current flowing through each of the first diode bridge 21Aa and the second diode bridge 21Ab.

The branching point of the fifth wire 15 is located between the input terminal 9 and the center position of the length of the first wire 11 from which the fifth wire 15 branches off. Specifically, in a section from the input terminal 9 to the first converter 20A, the branching point of the fifth wire 15 is at least half the distance of the section away from the first converter 20A. In this way, moving the branching point of the fifth wire 15 away from the first converter 20A makes the heat generated at the branching point of the fifth wire 15 less likely to be transmitted to the first converter 20A, and suppresses heat concentration around terminals of the first diode bridge 21Aa and the second diode bridge 21Ab.

### (4) Disposition of first and second diode bridges 21Aa and 21Ab

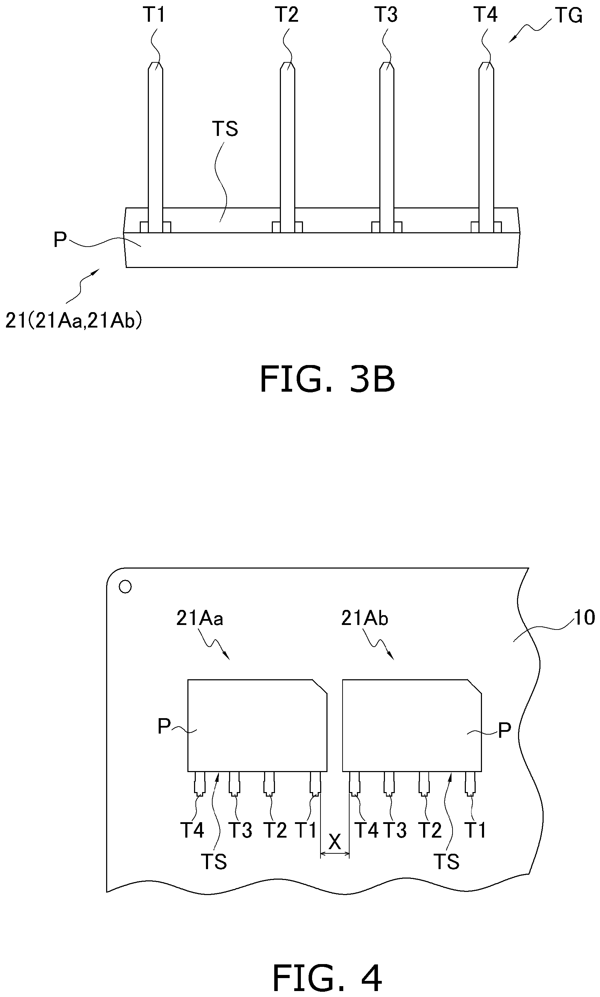

FIGS. 3A and 3B are a plan view and a side view of the diode module 21 used as the first diode bridge 21Aa and the second diode bridge 21Ab. In FIGS. 3A and 3B, the diode module 21 includes a package P having a rectangular parallelepiped shape containing four bridge-connected diode chips, and a terminal group TG protruding from one side of the package P.

The terminal group TG includes a first terminal T1, a second terminal T2, a third terminal T3, and a fourth terminal T4. The terminal group TG protrudes from one of two surfaces that are parallel to the thickness direction of the package P and include two long sides, and is then bent at a right angle. The surface from which the terminal group TG protrudes is referred to as a terminal arrangement surface TS.

An inclined surface C is formed at one corner on the surface side facing parallel to the terminal arrangement surface TS. The terminal group TG is arranged in order in a direction in which the second terminal T2, the third terminal T3, and the fourth terminal T4 are away from the inclined surface C (hereinafter referred to as a first direction D1) based on the first terminal T1 closest to the inclined surface C.

The second terminal T2 and the third terminal T3 are AC input terminals. The first terminal T1 is a positive DC output terminal. The fourth terminal T4 is a negative DC output terminal.

FIG. 4 is a plan view showing mounting positions of the first diode bridge 21Aa and the second diode bridge 21Ab on the printed wiring board 10. In FIG. 4, the first diode bridge 21Aa and the second diode bridge 21Ab are mounted on the printed wiring board 10 such that respective terminal arrangement surfaces TS are arranged in a horizontal row.

The first terminal T1 of the first diode bridge 21Aa and the fourth terminal T4 of the second diode bridge 21Ab are adjacent to each other, but the creepage distance X is ensured to be 3.2 mm or more. Therefore, a sufficient creepage distance is ensured.

Furthermore, the terminal groups TG of both the first diode bridge 21Aa and the second diode bridge 21Ab do not face each other, making heat less likely to concentrate on the terminals and on conductive patterns where the terminals are soldered.

### (5) Features

(5-1)
In the power generation device 100, one input of the second converter 20B is connected to any one of the first wire 11 (R phase), the second wire 12 (S phase), and the third wire 13 (T phase) between the input terminal 9 and the first converter 20A, and the other input of the second converter 20B is connected to the fourth wire 14 (N phase). As a result, an increase in the current value flowing through the first diode bridge 21Aa and the second diode bridge 21Ab of the first converter 20A is suppressed.

(5-2)
The branching point of the fifth wire 15 is located between the input terminal 9 and the center position of the length of the first wire 11 from which the fifth wire 15 branches off. As a result, the branching point of the fifth wire 15 is moved away from the first converter 20A, suppressing heat concentration around the terminals of the first converter 20A.

(5-3)
Each of the first diode bridge 21Aa and the second diode bridge 21Ab is a diode module in which four bridge-connected diode chips are incorporated in one package. The two diode modules are mounted on the first surface 10a of the printed wiring board 10.

The two diode modules are disposed such that respective terminal groups TG are separated from each other by the creepage distance of 3.2 mm or more, and respective terminal arrangement surfaces TS do not face each other. Therefore, the terminal groups of the two diode modules do not face each other, suppressing heat concentration on the terminals and the conductive pattern. The diode modules may also have a heat dissipation plate.

(5-4)
The first varistor 28 that serves as a surge absorber is connected between the AC input terminals of each of the first diode bridge 21Aa and the second diode bridge 21Ab. Therefore, even when a voltage exceeding a predetermined value is applied between the AC input terminals, the voltage between the AC input terminals can be limited to the predetermined value.

(5-5)
The second varistor 29 is connected between the DC output terminals of each of the first diode bridge 21Aa and the second diode bridge 21Ab. Therefore, extraneous pulses or power source noise is absorbed, and furthermore, the transmission of noise to the AC power source is prevented.

(5-6)
Each of the first inverter circuit 25A and the second inverter circuit 25B is a power module in which the upper arm-side switching element and the lower arm-side switching element are incorporated in one package, and is mounted on the first surface 10a of the printed wiring board 10.

Modularization facilitates the design of peripheral circuits on the first surface 10a of the printed wiring board 10, which is the mounting surface.

(5-7)
The printed wiring board 10 is a multi-layer printed wiring board having a plurality of conductive pattern layers laminated with insulator layers interposed therebetween, making it possible to wire the conductive patterns not only on the surface but also in inner layers of the printed wiring board 10, and to mount components at a high density.

### (6) Modifications

The disposition of the first diode bridge 21Aa and the second diode bridge 21Ab is not limited to the disposition shown in FIG. 4, and will be described below as modifications.

### (6-1) First modification

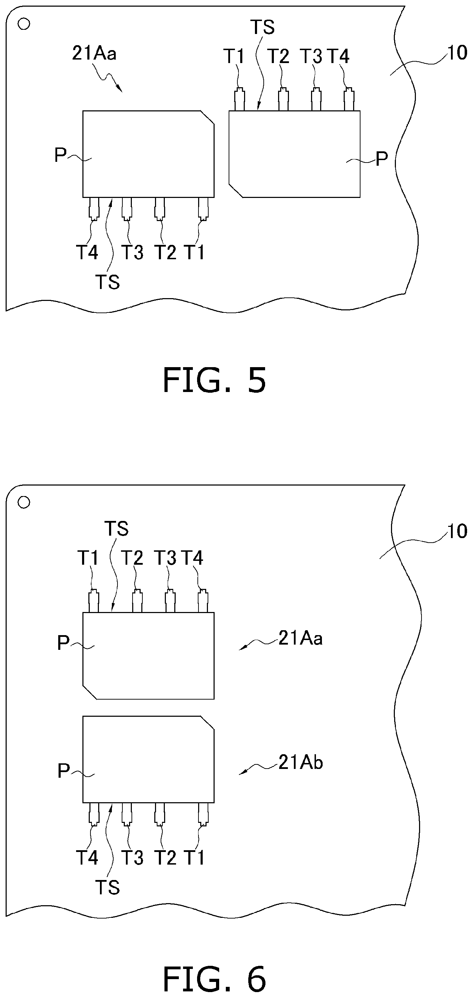

FIG. 5 is a plan view showing mounting positions of the first diode bridge 21Aa and the second diode bridge 21Ab on the printed wiring board 10 in the first modification.

In FIG. 5, the first diode bridge 21Aa and the second diode bridge 21Ab are mounted on the printed wiring board 10 such that respective terminal arrangement surfaces TS face in the opposite directions to each other.

The terminal group TG of the first diode bridge 21Aa and the terminal group TG of the second diode bridge 21Ab do not face each other, making heat less likely to concentrate on the terminals and on conductive patterns where the terminals are soldered.

### (6-2) Second modification

FIG. 6 is a plan view showing mounting positions of the first diode bridge 21Aa and the second diode bridge 21Ab on the printed wiring board 10 in the second modification.

In FIG. 6, the first diode bridge 21Aa and the second diode bridge 21Ab are mounted on the printed wiring board 10 such that respective terminal arrangement surfaces TS face in the opposite directions to each other and are disposed in a direction orthogonal to the arrangement direction of the terminal groups TG.

The terminal group TG of the first diode bridge 21Aa and the terminal group TG of the second diode bridge 21Ab do not face each other, making heat less likely to concentrate on the terminals and on conductive patterns where the terminals are soldered.

### (6-3) Third modification example

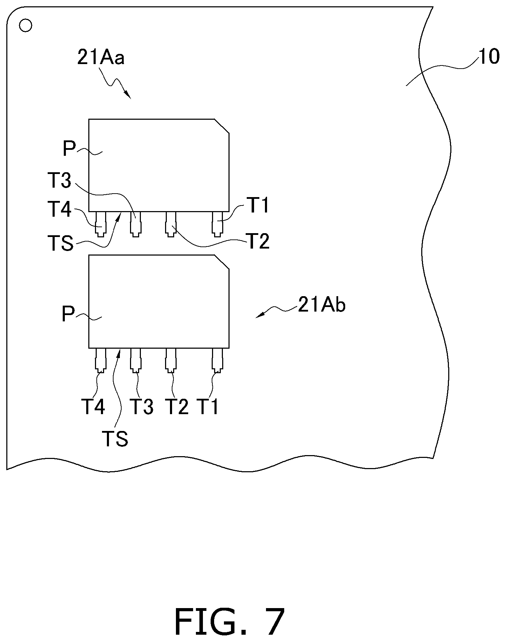

FIG. 7 is a plan view showing mounting positions of the first diode bridge 21Aa and the second diode bridge 21Ab on the printed wiring board 10 in the third modification.

In FIG. 7, the first diode bridge 21Aa and the second diode bridge 21Ab are mounted on the printed wiring board 10 such that respective terminal arrangement surfaces TS face in the same direction as each other and are disposed in a direction orthogonal to the arrangement direction of the terminal groups TG.

The terminal group TG of the first diode bridge 21Aa and the terminal group TG of the second diode bridge 21Ab do not face each other, making heat less likely to concentrate on the terminals and on conductive patterns where the terminals are soldered.

### <Second embodiment>

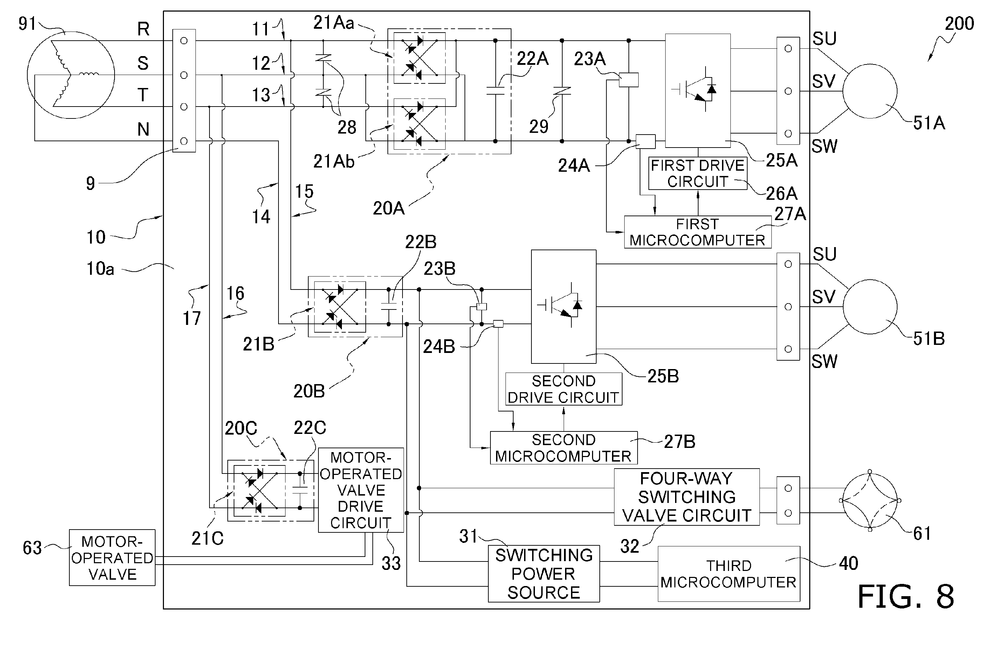

FIG. 8 is a circuit diagram showing a configuration of a power generation device 200 according to a second embodiment of the present disclosure. In FIG. 8, the power generation device 200 differs from the power generation device 100 in FIG. 1 by further including a third converter 20C. Since other configurations are the same as the configuration of the power generation device 100 in FIG. 1, only the differences will be described here.

The third converter 20C includes a fourth diode bridge 21C and a third smoothing capacitor 22C. The fourth diode bridge 21C is connected between a sixth wire 16 and a seventh wire 17. The sixth wire 16 and the seventh wire 17 branch off from any two wires of a first wire 11, a second wire 12, and a third wire 13. In this embodiment, the sixth wire 16 branches off from the second wire 12, and the seventh wire 17 branches off from the third wire 13.

The third converter 20C converts AC power into DC power and supplies the DC power to predetermined loads (except first inverter circuit 25A, second inverter circuit 25B, switching power source 31, and four-way switching valve circuit 32). As one example, in the present embodiment, the third converter 20C supplies DC power to a motor-operated valve drive circuit 33 as shown in FIG. 8. The motor-operated valve drive circuit 33 controls the operation of a motor-operated valve 63.

In the power generation device 200, two inputs of the third converter 20C are connected to any two of the first wire 11, the second wire 12, and the third wire 13 between an input terminal 9 and a first converter 20A, thereby suppressing an increase in the current value flowing through a first diode bridge 21Aa and a second diode bridge 21Ab of the first converter 20A.

A branching point of the sixth wire 16 is located between the input terminal 9 and the center position of the length of the second wire 12 from which the sixth wire 16 branches off. Furthermore, a branching point of the seventh wire 17 is located between the input terminal 9 and the center position of the length of the third wire 13 from which the seventh wire 17 branches off. As a result, the branching points of the sixth wire 16 and the seventh wire 17 are moved away from the first converter 20A, suppressing heat concentration around the terminals of the first converter 20A.

### <Modification common to first embodiment and second embodiment>

In the first embodiment and the second embodiment, the first diode bridge 21Aa is connected between the first wire 11 and the second wire 12, and the second diode bridge 21Ab is connected between the second wire 12 and the third wire 13.

However, the configuration is not limited to this example, and the first diode bridge 21Aa may be connected between the second wire 12 and the third wire 13, and the second diode bridge 21Ab may be connected between the first wire 11 and the third wire 13.

Alternatively, the first diode bridge 21Aa may be connected between the first wire 11 and the third wire 13, and the second diode bridge 21Ab may be connected between the first wire 11 and the second wire 12.

### <Other configurations>

(A)

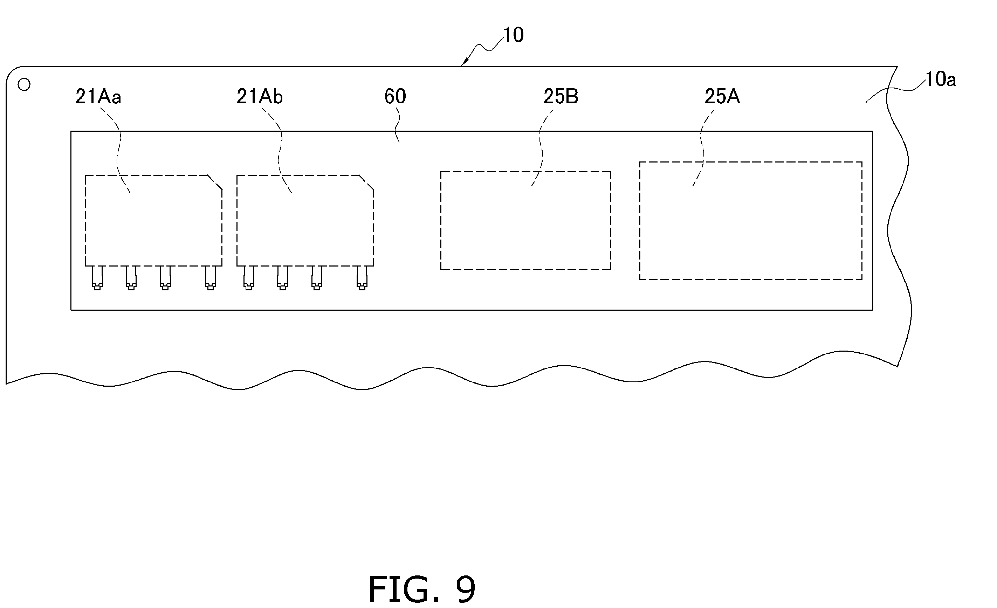

FIG. 9 is a plan view of a heat sink 60, which cools the first diode bridge 21Aa, the second diode bridge 21Ab, the first inverter circuit 25A, and the second inverter circuit 25B.

In the first embodiment and the second embodiment, the first diode bridge 21Aa, the second diode bridge 21Ab, the first inverter circuit 25A, and the second inverter circuit 25B are high heat generating parts.

In FIG. 9, since the first diode bridge 21Aa, the second diode bridge 21Ab, the first inverter circuit 25A, and the second inverter circuit 25B are mounted on the first surface 10a of the printed wiring board 10, the common heat sink 60 can cool these parts. Therefore, it is possible to reduce the number of parts and the installation space.

(B)

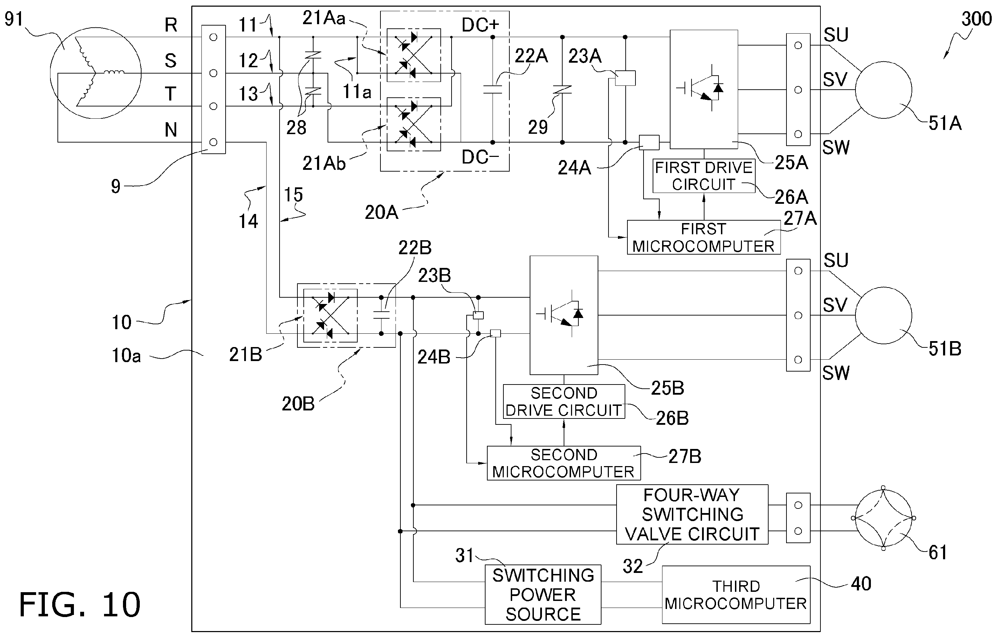

FIG. 10 is a circuit diagram showing a configuration of a power generation device 300 including the first diode bridge 21Aa connected to one power source line selected from three power source lines: the first wire 11, the second wire 12, and the third wire 13, and the second diode bridge 21Ab connected between the remaining two power source lines.

In FIG. 10, the first converter 20A converts the three-phase AC power source R (R phase), S (S phase), and T (T phase) into the DC power source including DC+ (positive) and DC- (negative) and supplies the DC power source to the inverter 25A.

The first converter 20A includes the first diode bridge 21Aa, the second diode bridge 21Ab, and a first smoothing capacitor 22A.

In FIG. 10, the first diode bridge 21Aa is a single-phase diode bridge. The first diode bridge 21Aa fully rectifies the AC power input from the first wire 11 connected to the R phase and a branch wire 11a branching off from the first wire 11.

The second diode bridge 21Ab is a single-phase diode bridge. The second diode bridge 21Ab fully rectifies the AC power input from the second wire 12 and the third wire 13 connected to the T phase.

The only difference between FIGS. 10 and 1 is the wiring method of the power source lines and the first diode bridge 21Aa, and the rest of the configuration is the same, and thus the description thereof will be omitted.

FIG. 10 is one example, and as another example, the AC power input from the second wire 12 that connects the first diode bridge 21Aa to the S phase, and a branch wire branching off from the second wire 12 may be fully rectified, and the AC power input from the first wire 11 that connects the second diode bridge 21Ab to the R phase, and the third wire 13 connected to the T phase may be fully rectified.

Alternatively, the AC power input from the third wire 13 that connects the first diode bridge 21Aa to the T phase, and a branch wire branching off from the third wire 13 may be fully rectified, and the AC power input from the first wire 11 that connects the second diode bridge 21Ab to the R phase, and the second wire 12 connected to the S phase may be fully rectified.

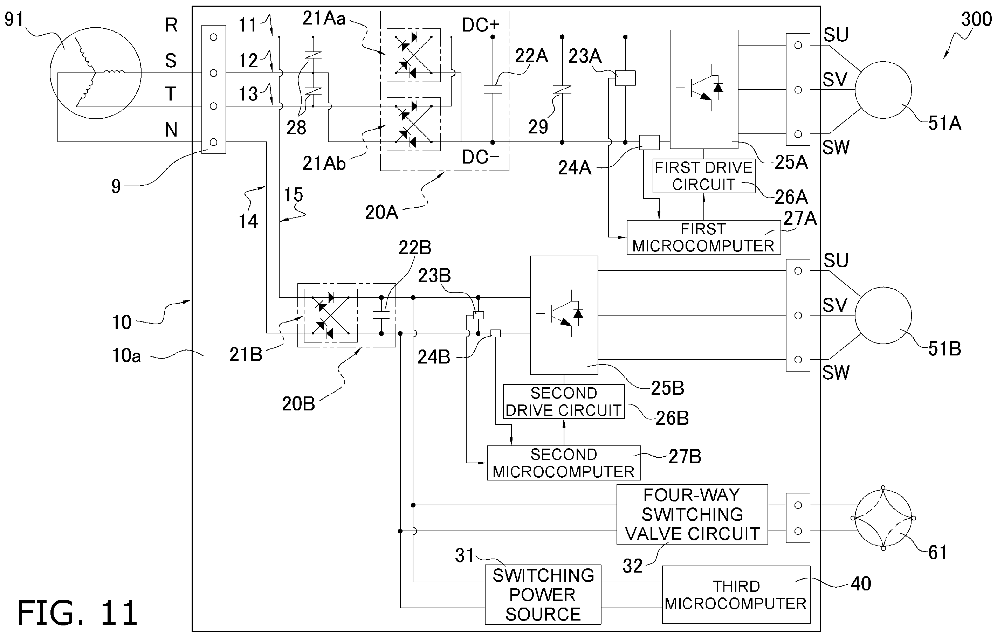

(C)
However, for example, the branch wire 11a branching off from the first wire 11 may be eliminated as shown in FIG. 10, and the first diode bridge 21Aa may be connected to the first wire 11, like the circuit diagram of the power generation device 300 as shown in FIG. 11.

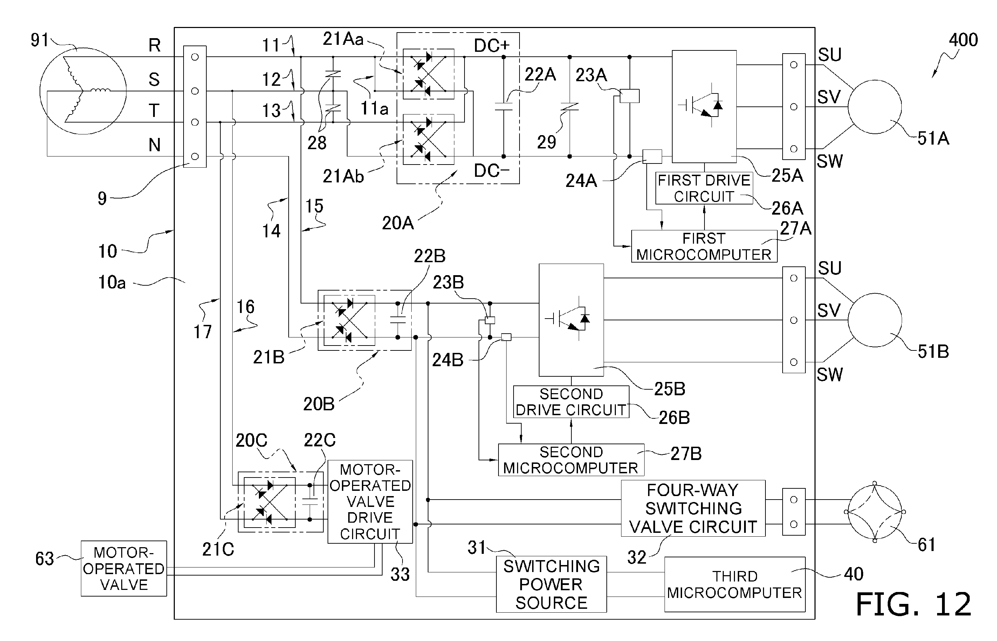

(D)
The wiring method between the power source lines and the first diode bridge 21Aa shown in FIG. 10 can be applied to FIG. 8 to form a circuit diagram of a power generation device 400 shown in FIG. 12.

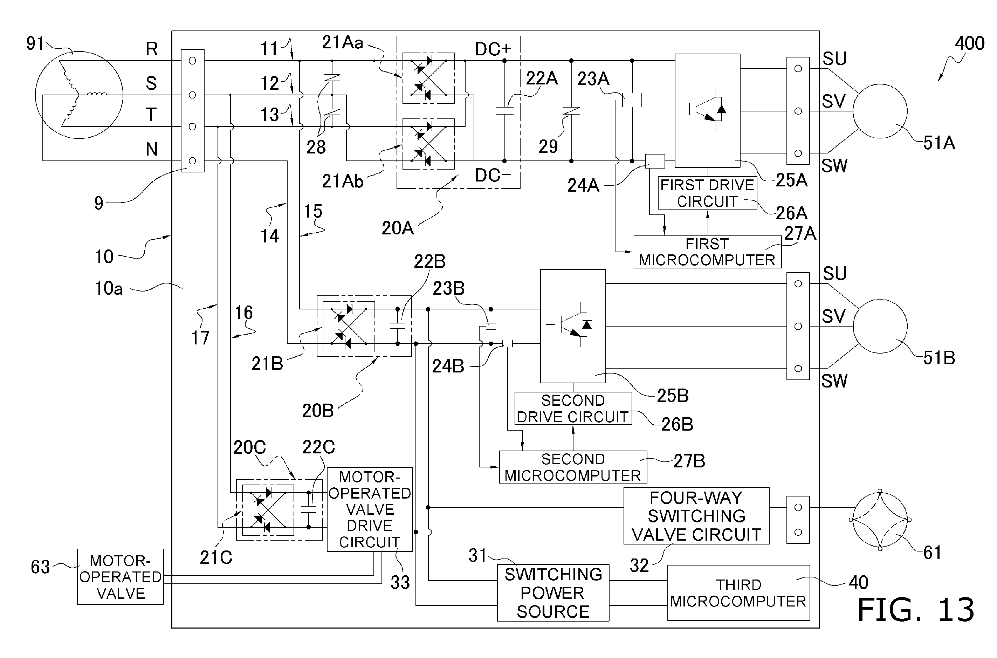

(E)
The wiring method between the power source lines and the first diode bridge 21Aa shown in FIG. 11 can be applied to FIG. 8 to form a circuit diagram of a power generation device 400 shown in FIG. 13.

The embodiments of the present disclosure have been described above. It will be understood that various modifications to modes and details should be available without departing from the gist and the scope of the present disclosure recited in the claims.

### REFERENCE SIGNS LIST

9: input terminal
10: printed wiring board
10a: first surface
11: first wire
12: second wire
13: third wire
14: fourth wire
15: fifth wire
16: sixth wire
17: seventh wire
20A: first converter
20B: second converter
20C: third converter
21Aa: first diode bridge
21Ab: second diode bridge
21B: third diode bridge
21C: fourth diode bridge
25A: first inverter circuit
25B: second inverter circuit
28: first varistor
29: second varistor
60: heat sink
100, 200: power generation device
300, 400: power generation device
D3a, D4a, D5a: upper arm-side switching element
D3b, D4b, D5b: lower arm-side switching element
Q3a, Q4a, Q5a: upper arm-side switching element
Q3b, Q4b, Q5b: lower arm-side switching element
T1, T4: DC output terminal
T2, T3: AC input terminal
TG: terminal group
TS: terminal arrangement surface

### CITATION LIST

### PATENT LITERATURE

Patent Literature 1: Japanese Patent Publication Laid-Open No. 2012-165509

## Claims

1. A power generation device (100, 200) mounted on a printed wiring board (10), the power generation device comprising:
an input terminal (9) configured such that an R phase, an S phase, a T phase, and an N phase are input from a power source that supplies three-phase AC in a three-phase, four-wire system;
a first wire (11), a second wire (12), a third wire (13), and a fourth wire (14) connected to the R phase, the S phase, the T phase, and the N phase, respectively, via the input terminal (9);
a first converter (20A) including: a first diode bridge (21Aa) connected between two power source lines selected from three power source lines of the first wire (11), the second wire (12), and the third wire (13) as a first combination; and a second diode bridge (21Ab) connected between two of the power source lines selected from the three power source lines as a second combination different from the first combination, the first converter converting AC power to DC power;
a fifth wire (15) that branches off from any one wire of the first wire (11), the second wire (12), and the third wire (13); and
a second converter (20B) that includes a third diode bridge (21B) connected between the fourth wire (14) and the fifth wire (15) and converts AC power into DC power.

2. A power generation device (300, 400) mounted on a printed wiring board (10), the power generation device comprising:
an input terminal (9) configured such that an R phase, an S phase, a T phase, and an N phase are input from a power source that supplies three-phase AC in a three-phase, four-wire system;
a first wire (11), a second wire (12), a third wire (13), and a fourth wire (14) connected to the R phase, the S phase, the T phase, and the N phase, respectively, via the input terminal (9);
a first converter (20A) including: a first diode bridge (21Aa) connected to one power source line selected from three power source lines of the first wire (11), the second wire (12), and the third wire (13); and a second diode bridge (21Ab) connected between remaining two of the power source lines, the first converter converting AC power to DC power;
a fifth wire (15) that branches off from any one wire of the first wire (11), the second wire (12), and the third wire (13); and
a second converter (20B) that includes a third diode bridge (21B) connected between the fourth wire (14) and the fifth wire (15) and converts AC power into DC power.

3. The power generation device (100, 200, 300, 400) according to claim 1 or 2, wherein
a branching point of the fifth wire (15) is located between a center position of a length of the wire from which the fifth wire (15) branches off, and the input terminal (9).

4. The power generation device (200, 400) according to any one of claims 1 to 3, further comprising:
a sixth wire (16) and a seventh wire (17) that branch off from any two wires of the first wire (11), the second wire (12), and the third wire (13); and
a third converter (20C) that includes a fourth diode bridge (21C) connected between the sixth wire (16) and the seventh wire (17), and converts AC power into DC power.

5. The power generation device (100, 200, 300, 400) according to any one of claims 1 to 4, wherein each of the first diode bridge (21Aa) and the second diode bridge (21Ab) is a diode module in which four bridge-connected diode chips are incorporated in one package, and the two diode modules are mounted on a first surface (10a) of the printed wiring board (10).

6. The power generation device (100, 200, 300, 400) according to claim 5, wherein
each of the diode modules includes:
a terminal group (TG) in which two AC input terminals (T2, T3) and two DC output terminals (T1, T4) are arranged in a row in a first direction; and
a terminal arrangement surface (TS) on which the terminal group (TG) is arranged, and
the two diode modules are disposed such that each of the terminal groups (TG) is separated from each other by a creepage distance of 3.2 mm or more, and each of the terminal arrangement surfaces (TS) does not face each other.

7. The power generation device (100, 200, 300, 400) according to claim 5, wherein the diode modules include a heat dissipation plate.

8. The power generation device (100, 200, 300, 400) according to claim 5, wherein
each of the diode modules includes two AC input terminals and two DC output terminals, and
an overvoltage suppression element is connected between the two AC input terminals (T2, T3).

9. The power generation device (100, 200, 300, 400) according to claim 5, wherein
each of the diode modules includes two AC input terminals (T2, T3) and two DC output terminal (T1, T4), and
at least one of an overvoltage suppression element and a noise eliminating element is connected between the two DC output terminals (T1, T4).

10. The power generation device (100, 200, 300, 400) according to any one of claims 1 to 9, further comprising a first inverter circuit (25A) connected between output terminals of the first converter (20A), wherein the first inverter circuit (25A) is a power module in which an upper arm-side switching element (Q3a, Q4a, Q5a, D3a, D4a, D5a) and a lower arm-side switching element (Q3b, Q4b, Q5b, D3b, D4b, D5b) are incorporated in one package, and is mounted on the first surface (10a) of the printed wiring board (10).

11. The power generation device (100, 200, 300, 400) according to any one of claims 1 to 10, further comprising a second inverter circuit (25B) connected between output terminals of the second converter (20B), wherein the second inverter circuit (25B) is the power module in which the upper arm-side switching element (Q3a, Q4a, Q5a, D3a, D4a, D5a) and the lower arm-side switching element (Q3b, Q4b, Q5b, D3b, D4b, D5b) are incorporated in one package, and is mounted on the first surface (10a) of the printed wiring board (10).

12. The power generation device (100, 200, 300, 400) according to any one of claims 1 to 11, wherein
the printed wiring board (10) is a multilayer printed wiring board having a plurality of conductive pattern layers laminated with an interposed insulator layer.

13. The power generation device (100, 200, 300, 400) according to claim 5, further comprising:
a first inverter circuit (25A) connected between output terminals of the first converter (20A);
a second inverter circuit (25B) connected between output terminals of the second converter (20B); and
one heat sink (60),
wherein each of the first inverter circuit (25A) and the second inverter circuit (25B) is a power module in which an upper arm-side switching element and a lower arm-side switching element are incorporated in one package, and is mounted on the first surface (10a) of the printed wiring board (10), and
the heat sink (60) cools the two diode modules and the two power modules.
